# EUROPÄISCHE PATENTSCHRIFT

(11) **EP 0 945 487 B1**
(45) Veröffentlichungstag und Bekanntmachung des Hinweises auf die Patenterteilung: **19.02.2003**
(21) Anmeldenummer: 99105714.2
(22) Anmeldetag: 20.03.1999
(51) Int. Cl.: C08L 3/04, C08L 3/08, C08L 3/14, C08L 3/18, C08J 5/18

(54) **Folie und Folienprodukte aus Stärke- oder Amylose-Hydroxypropylethern**
Films and film products made of hydroxypropyl ethers of starch or amylose
Films et produits similaires à base d'hydroxypropyl éthers d'amidon ou d'amylose

(30) Priorität: 26.03.1998 DE 19813229
(43) Veröffentlichungstag der Anmeldung: 29.09.1999
(73) Patentinhaber: Gesellschaft für Spezialfolienentwicklung mbH, 06766 Wolfen (DE)
(72) Erfinder: Pawlak, Peter, Dr.-Ing., 06794 Zscherndorf (DE); Albrecht, Rotraut, 06766 Wolfen (DE); Zuleeg, Heike, 06766 Wolfen (DE); Härter, Gernod, 06766 Bobbau (DE); Böttcher, Silvio, 06268 Langeneichstädt (DE); Schwartze, Erich Heinrich, 48599 Gronau (DE)
(74) Vertreter: Heyner, Klaus, Dr.-Ing.

(56) Entgegenhaltungen:
- EP-A- 0 546 539
- US-A- 3 553 196
- US-A- 3 850 652
- US-A- 4 026 986
- O.A. NEUMÜLLER: "Römpps Chemie-Lexikon, 8. Aufl., Band 5" 1987 , FRANCKH'SCHE VERLAGSHANDLUNG , STUTTGART XP002130810 *Stichwort "Stärke"* * Seite 3945 - Seite 3947 *

## Beschreibung

Die Erfindung betrifft Folien sowie Folienprodukte aus Stärke- oderAmylose-Derivaten, die insbesondere im Bürobereich bzw. als Informationsträgermaterial sowie als Lehrund Lernmittel, beispielsweise als Overheadfolien, Drucker- und Zeichenfolien, Klarsichtschutzhüllen und Klarsichtteile von Briefkuverts oder als Oberflächenveredlungskomponente bei der Herstellung von Spezialpapieren und im Verpackungsbereich, beispielsweise als Klarsichtverpackungen oder entsprechende Teile von Verpackungen, aber auch im Verbund mit anderen Materialien angewendet werden können. Die Folien und Folienprodukte sind insbesondere auch als Verpackungsmaterial im Lebensmittelbereich sowie in der Landwirtschaft mit Vorteil anwendbar

Folien und Folienprodukte werden für unterschiedlichste Anwendungen in großen Mengen produziert. Angesichts der Tatsache, daß ein beträchtlicher Teil der hergestellten Folien und Folienprodukte für den einmaligen Gebrauch bestimmt sind und somit nach Gebrauch entsorgtwerden müssen, steht zunehmend die Forderung nach einer Recyclingfähigkeit. Die Vielzahl von unterschiedlichen, für Nichtfachleute kaum zu unterscheidenden Folien und Folienprodukte erschweren jedoch in hohem Maße ein Recycling in Form von Erfassung und Wiederverwertung. Als Alternative bieten sich Folien und Folienprodukte an, die in vollem Umfang biologisch abbaubar bzw. kompostierbar sind. Sie werden in Zukunft schwer bzw. nicht biologisch abbaubare Folien und Folienprodukte, beispielsweise aus Polyvinylchlorid, Polystyrol, Polyethylen usw., in temporären Anwendungsbereichen ersetzen, wenn es gelingt, vergleichbare Anwendungseigenschaften, insbesondere hinsichtlich mechanischer Stabilität und Transparenz, zu erreichen.
Stärke, als ein in ausreichendem Maße gewinnbarer nachwachsender Rohstoff, stand in der Vergangenheit im Mittelpunkt zahlreicher Untersuchungen zur Herstellung biologisch abbaubarer Folien und Folienprodukte.
Folien aus reiner Stärke und daraus hergestellte Produkte konnten bisher kaum mit konventionellen Erzeugnissen aus synthetischen Polymeren konkurrieren. Besonders ihre unzureichenden mechanischen Eigenschaften, insbesondere geringe Reißfestigkeit und Dehnbarkeit, aber auch mangelnde Transparenz und Stabilität, sind Nachteile, die eine breite Anwendung der Produkte verhindert haben.
Zur Behebung dieser Nachteile, insbesondere zur Verbesserung der mechanischen Eigenschaften, wurde vorgeschlagen, der Stärke verschiedene Weichmacher, wie Sorbitol, Glycerin, Polyvinylalkohol o. ä., zuzusetzen (z. B. DE-B-I7 45 680). Ebenso wird in der EP-A-0 546 539 vorgeschlagen beim Gießen von Folien auf der Basis von Hydroxypropylstärke 10 % Diethylenglykol als Weichmacher zuzusetzten, um ausreichende mechanische Eigenschaften zu erreichen. Eine andere Möglichkeit zur Verbesserung der mechanischen Eigenschaften von Stärkeprodukten besteht in der Zumischung von synthetischen Polymeren aufPolyolefinbasis (z. B. WO-A-90/14388 mit Zusatz von LDPE). Die damit erreichten Verbesserungen sind aber nicht ausreichend, um ernsthaft mit Vergleichsprodukten aus synthetischen Polymeren konkurrieren zu können.
Ein weiterer Versuch, die genannten Nachteile zu beseitigen oder zumindest zu verringern, bestand darin, sogenannte Spezialamylosen, wie z. B. (chemisch) modifizierte (High-)Amylosen, einzusetzen. In der US-A-3 553 196 wird eine Folie aus Stärkeester (Maisstärkeacetat mit 70 % Amylosegehalt) beschrieben. Verfahrensbedingt führt die hier beschriebene Dispersion acetylierten Maisstärke durch Jet-cooking zu einem molekularen Abbau und damit einer Versprödung der hergestellten Folie.
Es lassen sich beispielsweise auch bestimmte Hydroxyalkylderivate der Amylose zu thermoplastischen Formteilen oder Folien, Filmen und Membranen verarbeiten, bzw. es können Hydroxypropylstärken als Zugabe zu anderen Polymeren eingesetzt werden, um einzelne gezielte Eigenschaftsverbesserungen zu erreichen.
Ein spezieller Anwendungsfall hierzu ist in dem US-A-3 850 652 beschrieben. Das Patent betrifft die Herstellung einer flexiblen, mechanisch stabilen Vielzweck-Membran unter Zugabe von Hydroxypropylstärke. Die besondere Eigenschaft dieser Vielzweck-Membran besteht in der Fähigkeit, Körperflüssigkeiten u.ä. aufzunehmen. Die Membran ist aber weder transparent, noch vollständig biologisch abbaubar.
Auch werden Hydroxypropylstärken u.a. zur Verbesserung des biologischen Abbauverhaltens von Produkten aus ungesättigten, biologisch schwer abbaubaren Kohlenwasserstoff-Polymerverbindungen verwendet, wie es beispielsweise in dem EP-A-0 417 828 beschrieben wird. Die hierbei erreichten Produkteigenschaften sind aber ebenfalls keineswegs ausreichend. Die Produkte sind zwar transparent, weisen aber eine leicht bräunliche Färbung auf und besitzen vergleichsweise geringe Festigkeitswerte.
In dem US-A-3 778 392 wird desweiteren eine polymer Stärke-Mischung unter Zugabe von Hydroxypropylstärke beschrieben, die als Beschichtungskomponente für qualitativ hochwertige Papiere verwendet wird. Auch hierbei ist neben dem vergleichsweise sehr aufwendigen Herstellungsprozeß die nicht gegebene biologische Abbaubarkeit des Produktes zu kritisieren.
In allen genannten Fällen konnten die realisierten Produkte aus Stärke bzw. Amylose hinsichtlich ihrer Anwendungseigenschaften nicht mit Vergleichsprodukten aus synthetischen Polymeren konkurrieren. Außerdem war meist durch die der Stärke bzw. Amylose zugegebenen Zusatzstoffe und Weichmacher keine vollständige biologische Abbaubarkeit der Finalprodukte mehr gegeben.
Mit der Erfindung wird der Zweck verfolgt, Folien und Folienprodukte aus Stärke- oder Amylose-Derivaten zu schaffen, die vom Grundsatz her ohne Zusatz synthetischer Stoffe und ohne Weichmacher deutlich bessere physikalisch-mechanische Eigenschaften aufweisen als bisherige Folien aus Stärke- oder Amylose bzw. deren Derivate. Insbesondere wird das Ziel verfolgt, Folien und Folienprodukte mit hoher Reißfestigkeit und Dehnbarkeit sowie hoherTransparenz zu schaffen, die im Bürobereich als Overhead-, Kopier- und Druckerfolien bzw. als oberflächenveredelnde Beschichtungskomponente für die Herstellung von Spezialpapieren sowie in der Verpackungsindustrie als Verpackungsmaterial einsetzbar sind und sich durch vollständige biologische Abbaubarkeit auszeichnen.
Erfindungsgemäß wird dies durch Folien und Folienprodukte gemäß dem I. Patentanspruch erreicht. In den Unteransprüchen sind vorteilhafte Ausgestaltungen der Erfindung beschrieben.
Es wurde gefunden, daß Folien oder Folienprodukte, die die Merkmale des I. Hauptanspruches aufweisen, die aus reinen Stärke- oder Amylose-Hydroxypropyl-Ether-Lösungen ohne jegliche Zusätze hergestellt wurden, überraschenderweise ausreichend gute mechanische Eigenschaften und eine hohe Transparenz besitzen. Durch den Verzicht aufjegliche synthetische Zusätze und Weichmacher ist die vollständige biologische Abbaubarkeit der Folien bzw. Folienprodukte gegeben.
Besonders günstige Ergebnisse werden erreicht, wenn der Ausgangsrohstoff, d. h. die Stärke, aus der Gruppe der Highamylose-Stärken stammt und einen Amylosegehalt von > 60 % aufweist. Die erfindungsgemäßen Parameter des Derivates,
- Salzarmut,
- mittleres Molekulargewicht zwischen I0⁵ und 2* 10⁷ g/mol,
- Polydispersität von 2 bis 8,
- Substitutionsgrad von 0,1 bis 0,5 (vorzugsweise 0,1 bis 0,3),
- nahezu gleiche Substituentenverteilung zwischen den C₂-/C₃- und C₆-Bindungsstellen innerhalb der Glucoseeinheit und
- ein geringerAnteil an schwerlöslichen Feststoffen
werden durch eine gezielte Hydroxypropylierung und Entsalzung erreicht. Nach der Hydroxypropylierung und Entsalzung liegt das Derivat als kolloidale, viskoeleastische Lösung vor und kann in bekannter Weise, beispielsweise durch Gießen, so zu erfindungsgemäßen Folien oder Folienpropdukten verarbeitet werden, daß diese eine amorphe Struktur mit geringen kristallinen Anteilen aufweist, wobei die Partikelgrößen unter 400 nm und damit unterhalb der Sichtbarkeitsgrenze liegen. Dies ist eine wichtige Vorraussetzung für eine hohe Transparanz der Folie bzw. des Folienproduktes. Der Wassergehalt der Folie bzw. des Folienproduktes beeinflußt in hohem Maße die mechnischen Eigenschaften. Er liegt bei Normalklima unterhalb von 25 Ma-%. Die Folien bzw. Folienprodukte zeichnen sich durch eine hohe Transparenz sowie im Vergleich zu herkömmlichen Stärke- oder Amylose-Folien bzw. Folienprodukten durch deutlich verbesserte Festigkeits- und Dehnungseigenschaften aus. Bedingt durch den relativ konstanten Wassergehalt der Folien bzw. der Folienprodukte bleiben diese Eigenschaften auch bei längerer Lagerung bei einer relativen Luftfeuchte zwische 30 und 70 % und Normaltemperatur (ca. 23 °C) weitgehend erhalten.
Die erfindungsgemäßen Folien bzw Folienprodukte zeichnen sich durch einen inneren und einen äußeren Weichmachungseffekt aus, der einerseits daraufzurückzuführen ist, daß durch die chemische Anlagerung sterisch großer Seitengruppen die Abstände zwischen den einzelnen Makromolekülen erweitert sind und dadurch die Beweglichkeit der Polymerketten erhöht ist, und andererseits niedermolekulare Gruppen (wie im vorliegenden Fall Wasser, das gleichzeitig als Lösungsmittel fungiert) in die hydroxypropylierte Amylose leicht eindringen können bzw. physikalisch gebunden werden und so als äußerer Weichmacher wirken.
In diesem Zusammenhang ist die Stärkekonzentration bzw. die Überlappungsdichte der Stärkemoleküle von großer Bedeutung, da hierdurch der Verlauf und die Art des Einschließens bzw. physikalischen Bindens der Wassermoleküle und somit auch die mechanischen Eigenschaften beeinflußt werden können.
Bei den erfindungsgemäßen Folien und Folienprodukten kann daher auf zusätzliche Weichmacher oder Additive verzichtet werden. Damit ist zum einen eine vollständige biologische Abbau barkeit/Kompostierbarkeit der Folien bzw. Folienprodukte gegeben, zum anderen kann es nicht zu einer Versprödung der Folie bzw. Folienprodukte und zu einer Beeinträchtigung der mit der Folien bzw. dem Folienprodukt in Kontakt stehenden Materialien infolge Migration des Weichmachers kommen. Die mechanische Stabilität der Folien im Bereich von 30 bis 70 % relativer Luftfeuchte bei Normaltemperatur (ca. 23 °C) ist gut.
Die amorphe Struktur und eine Partikelgröße <400nm verleihen der Folie bzw. dem Folienprodukt exzellente optische Eigenschaften. Es werden Transmissionsgrade von bis zu 93% (bei 560 nm) erzielt. Die Folien sind damit für eine Anwendung als Overheadfolie besonders geeignet. Anwendungsmöglichkeiten als Informationsträger bieten sich an, da die Folien gut beschreib- und bedruckbar sowie kopierfähig sind. Aufgrund dieser Eigenschaften sind spezielle Aufzeichnungsmaterialien beispielsweise für das Ink-Jet-Druckverfahren ein bevorzugtes Anwendungsgebiet der Erfindung. Dabei wird die Oberfläche eines Trägermateriales durch Auftragen einer Schicht eines Stärke- oder Amylose-Hydroxypropyl-Ether aus wäßriger Lösung so veredelt, daß ein mit dem Ink-Jet-Druckverfahren bedruckbares Folienprodukt entsteht. Trägermaterialien können Celulose oder andere beliebige Naturfasern sein. Selbstverständlich sind auch Trägermaterialien auf synthetischer Basis denkbar, wobei dann die biologische Abbaubarkeit des Folienproduktes ggf. nicht mehr gegeben ist.
Es gehört auch mit zur Erfindung, ein entsprechend beschaffener Stärke- oder Amylose-Hydroxypropyl-Ether als Bindemittel bei der Papier- und Kartonherstellung einzusetzen, um verbesserte mechanische bzw. optische Eigenschaften sowie bessere Oberflächeneigenschaften des Produktes zu erzielen.
Folien bzw. Folienüberzüge sollten bevorzugt eine Filmdicke zwischen 20 und 200 µm und eine Dichte in der Größenordnung von 1,3 g/cm³ aufweisen.
Die Eigenschaften der erfindungsgemäßen Folien und Folienprodukte lassen sich wie folgt zusammenfassen:
- Sie besitzen eine Zugfestigkeit von > 40 MPa bei Normalklima und liegen damit deutlich über herkömmlichen Highamylose-Stärkefolien und ebenfalls über 81/15 Copolymer Lactid/Caprolacton (22,0 MPa) und PVC - weich (16-34 MPa);
- Sie weisen eine Reißdehnung von bis zu 30 % auf und sind damit besser als PVC - hart (5 - 10 %) und vergleichbar mit Zellglas (längs 20 %, quer 55 %);
- Sie besitzen eine Reißfestigkeit von bis zu 60 MPa und sind damit besser als PE - niederer Dichte (längs I8 - 32 MPa, quer I6 - 25 MPa) sowie PE - mittlerer und hoher Dichte (längs 20 - 40 MPa, quer 15 - 30 MPa);
- Sie besitzen einen E-Modul von 10 bis 40 MPa/%;
- Sie weisen eine hohe Transparenz auf(Transmission > 80 % bei Licht eine Wellenlänge von 560 nm);
- Sie besitzen eine hohe Sperrwirkung gegenüber Gasen, insbesondere Stickstoff und Sauerstoff;
- Sie sind lagerbeständig im Bereich von 30 bis 70 % relativer Luftfeuchte bei 23 °C;
- Sie sind thermisch belastbar bei I70 °C für 15 Minuten ohne Farbänderung;
- Sie sind schweißbar, tiefziehbar, beschreib- und bedruckbar sowie kopierfähig;
- Sie besitzen nach dem Auftragen aus wäßriger Lösung auf ein Trägermaterial, wie beispielsweise Zellulose oder Naturfasern, ein ausgezeichnetes Haftungs- und Bindungsvermögen und bewirken eine wesentliche Verbesserung der jeweiligen Oberflächeneigenschaften und
- sie sind in bevorzugten Anwendungsformen frei von Weichmachern bzw. synthetischen Zusatzstoffen und vollständig biologisch abbaubar nach E-DIN 53 739, da es sich prinzipiell nur um Biopolymere handelt
Mit den vorgenannten Eigenschaften sind die erfindungsgemäßen Folien und Folienprodukte für spezifische Anwendungen entsprechend dem jeweiligen Eigenschaftsprofil eine echte Alternative gegenüber Folien und Folienprodukten, die aus synthetischen Kunststoffen, wie PVC, PE oder Polystyrol, hergestellt werden.
Bedingt durch ihre sehr geringe Gasdurchlässigkeit sind die erfindungsgemäßen Folien und Folienprodukte insbesondere auch als Verpackungsmaterial im Lebensmittelbereich geeignet, wobei selbstverständlich auch ein Verbund mit anderen Materialien möglich und ggf. vorteilhaft ist. Wenn die erfindungsgemäße Folien oder das Folienprodukte im Verbund mit anderen Materialien verwendet werden, ist eine vollständige biologische Abbaubarkeit natürlich nur dann gegeben, wenn alle Verbundkomponenten biologisch abbaubar sind.

Die Erfindung soll nachfolgend anhand von Ausführungsbeispielen näher erläutert werden:
Ausgangssrohstoffist bei den im folgenden aufgeführten Beispielen eine leicht gelbliche, pulvrige Markerbsenstärke mit
- einem Wassergehalt von 11,5 Ma-% (wobei der Wassergehalt von den Lagerbedingungen beeinflußt wird),
- einem Amylosegehalt von 77,4 %,
- einem Proteingehalt von 0,9% und
- einem mittleren Molekulargewicht zwischen I0⁵ und 2*I0⁷ g/mol.

### Beispiel 1:

Nach der Hydroxypropylierung mit Propylenoxid liegt ein Markerbsen-Stärke-Hydroxypropyl-Ether als eine trübe, kolloidale bis grobdisperse, viskoeleastische Lösung vor Der Substitutionsgrad DS des Markerbsen-Stärke-Hydroxypropyl-Ethers beträgt DS - 0,2 und der molare Substitutionsgrad MS - 0,39. Die Reaktion des Propylenoxids war in gleichem Maße mit den Hydroxylgruppen in C₂-/C₃ -Stellung und den Hydroxylgruppen in C₆ - Stellung erfolgt. Die salzarme trübe Lösung hatte eine elektrische Leitfähigkeit von 329 µS/cm. Aus dieser homogenen, blasenfreien Lösung wurde in bekannter Weise im Gießverfahren eine Folie hergestellt, wobei auf jegliche Zugabe von Weichmachern oder anderen Additiven verzichtet wurde. Die erhaltene Folie besitzt eine Schichtdicke von 30 ± 2 µm, ist brillant transparent und weist eine Transmission von T - 93,2 % bei Licht einer Wellenlänge von 560 nm auf. Die Untersuchung der Struktur der Folie ergab, daß fast ausschließlich Partikel < 400 nm, das heißt Partikel unterhalb der Sichtbarkeitsgrenze, vorhanden sind. 99 % der Folie sind wasserlöslich und besitzen ein mittleres Molekulargewichtvon 109000 g/mol mit einer bimodalen Molmassenverteilung. Bei 24 °C und 47 % relativer Luftfeuchte besitzt die Folie eine Dichte von 1,35 g/cm³. Die im Normalklima equilibrierte Folie weist einen Wassergehalt von 9,43 Ma-% auf Eine thermische Belastung der Folie im Trockenschrank 15 Minuten mit 170 °C verursachte keine visuell erkennbare Braunfärbung.
Die in Tabelle I enthaltenen mechanischen Parameter der Folie wurden bei Klimadaten 23/37,23/50 und 23/70 [°C/relative Luftfeuchte] ermittelt. Überraschenderweise weist die Folie deutlich höhere Festigkeitswerte aufals die bekannter Stärkefolien ohne Zusatzstoffe. Sowohl die Zug- als auch die Reißfestigkeit steigen erwartungsgemäß mit abnehmender relativer Luftfeuchte. Demgegenüber zeigt die Dehnung keine eindeutige Korrelation. Während die Zugdehnung bei 37 % relativer Luftfeuchte den Maximalwert besitzt, erreicht die Reißdehnung bei 50 % relativer Luftfeuchte die besten Resultate.
Die Folie ist über mehrere Monate bei Raumtemperatur von 20 bis 25 °C und einer relativen Luftfeuchte von 30 bis 70 % ohne Verlust der qualitativen Eigenschaften lagerbar. Auffeuchter Erde löst sich die Folie innerhalb von I bis 3 Stunden vollständig auf.
Die Folie ist beschreib- und bedruckbar und geeignet als wasserlösliche Folie für Verpackungszwecke (Substitutionsprodukt für hochpreisigen Polyvinylalkohol).

### Beispiel 2:

Die im Beispiel I beschriebene Markerbsen-Stärke-Hydroxypropyl-Ether-Lösung mit einer Konzentration >20 Ma-% wird als dünne Schicht auf eine Papier- oder Kartonunterlage aufgetragen und getrocknet. Das erhaltene Verbundmaterial zeichnet sich durch eine brillante, gut mittels Ink-Jet-Druckverfahren bedruckbare Oberfläche aus.

### Beispiel 3:

Aus einer gemäß dem Beispiel I aufgeschlossene Stärke-Hydroxypropyl-Ether-Lösung wird ohne jegliche Zugabe von Weichmachern oder anderen Additiven im Gießverfahren eine Folie mit einer Schichtdicke von 90 ± 8 µm hergestellt. Die Folie ist brillant transparent und weist eine Transmission von T-92,7 % bei Licht einer Wellenlänge von 560 nm auf Die Folie besitzt ein mittleres Molekulargewicht von 2158000 g/mol mit einer bimodalen Molmassenverteilung.
Die in Normalklima equilibrierte Folie weist einen Wassergehalt von 10,87 Ma-% auf Die in Tabelle I enthaltenen mechanischen Parameter der Folie wurden bei Klimadaten 23/37,23150 und 23/70 [°C/relative Luftfeuchte] ermittelt.
In gleichem Maße wie in Beispiel I weist die Folie deutlich bessere Festigkeitswerte auf als bekannte Stärkefolien ohne Zusatzstoffe.
Die Folie ist wie im Beispiel I über mehrere Monate ohne Verlust ihrer qualitativen Eigenschaften lagerbar Auf feuchter Erde löst sie sich ebenfalls innerhalb von I bis 3 Stunden vollständig auf.
Die Folie ist mit verschiedenen Medien beschreib- und bedruckbar sowie druckergängig und kopierfähig und damit als Overhadfolie geeignet. Sie ist insbesondere gut mittels Ink-Jet-Druckverfahrens bedruckbar.
Die Folie ist nach einer entsprechenden Vorkonditionierung in feuchter Atmosphäre tiefziehfähig, wobei ihre hohe Transparenz erhalten bleibt. Sie ist in besonderer Weise als biologisch abbaubares Blistermaterial geeignet

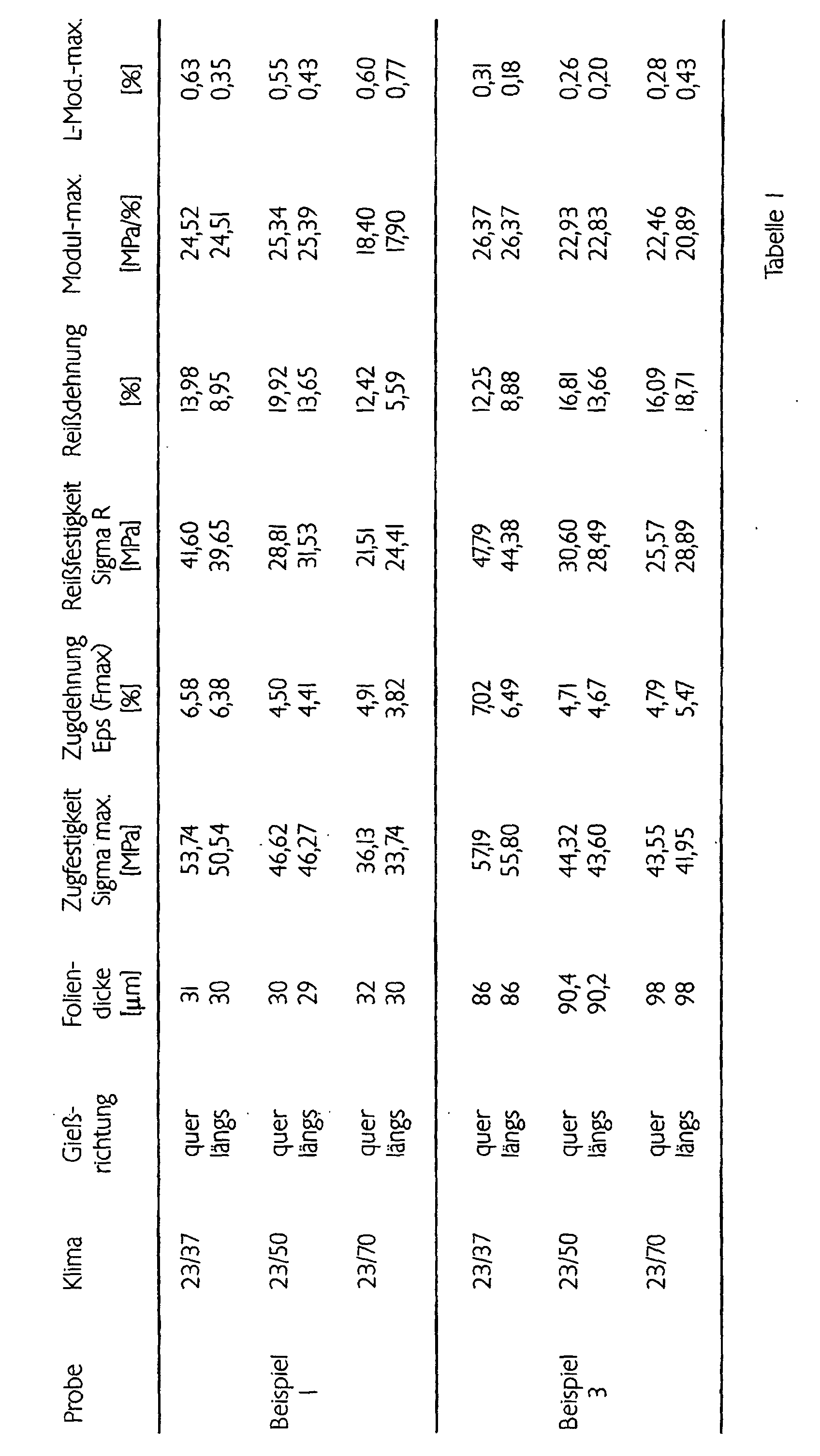

## Patentansprüche

1. Folien und Folienprodukte aus Stärke- oder Amylose-Derivaten hergestellt aus einer Stärke- oder Amylose-Hydroxypropyl-Ether-Lösung,
**gekennzeichnet durch** nachfolgende Merkmale
- Salzarmut der Stärke- oder Amylose-Hydroxypropyl-Ether-Lösung,
- ein mittleres Molekulargewicht zwischen I0⁵ und 2* I0⁷ g/mol des Derivates,
- einen Substitutionsgrad von 0,1 bis 0,5,
- eine nahezu gleiche Substituentenverteilung zwischen den C₂-/C₃- und C₆-Bindungsstellen innerhalb der Glucoseeinheit,
- einen Wassergehalt kleiner 25 Ma-% bei Normalklima,
- eine Polydispersität von 2 bis 8 sowie
- einer amorphen Struktur mit geringem kristallinen Anteil und
- Partikelgrößen kleiner/gleich 400 nm.

2. Folien und Folienprodukte nach Anspruch 1,
**dadurch gekennzeichnet, daß**
der Amylosegehalt des Ausgangsrohstoffes größer 60 % ist.

3. Folien und Folienprodukte nach einem dervorhergehenden Ansprüche,
**dadurch gekennzeichnet, daß** die Folien oder Folienprodukte
- von brillanter Transparenz sind, das heißt, eine Transmission von größer 80 % bei Licht einer Wellenlänge von 560 nm aufweisen,
- eine gute Feuchtebeständigkeit im Bereich von 30 bis 70 % relativer Luftfeuchte bei 23 °C besitzen,
- schweißbar, tiefziehbar, beschreib- und bedruckbar sowie kopierfähig sind,
- eine hohe Sperrwirkung gegenüber Gasen, insbesondere Stickstoff und Sauerstoff, besitzen und
- vollständig biologisch abbaubar nach E-DIN 53 739 sind.

4. Folien und Folienprodukte nach einem der vorgenannten Ansprüche,
**dadurch gekennzeichnet, daß**
die Folien oder Folienprodukte nach dem Auftragen aus wäßriger Lösung auf ein Trägermaterial ein ausgezeichnetes Haftungs- bzw. Bindungsvermögen besitzen und eine wesentliche Verbesserung der Oberflächeneigenschaften des Trägermateriales bewirken.

## Claims

1. Films and film products made of starch- or amylose derivatives manufactured from a starch- or amylose hydroxypropyl ether solution **characterized by** the following features:
- very low salt content of the starch- or amylose hydroxypropyl ether solution,
- a molecular-weight average of between 10⁵ and 2×10⁷ g/mol of the derivative,
- a degree of substitution of 0.1 to 0.5,
- an almost equal distribution of the substituents among the C₂-/C₃- and C₆-binding sites within the glucose unit,
- a water content of less than 25 wt.-% at standard conditions,
- a polydispersity of 2 to 8 as well as
- an amorphous structure with small crystalline fraction, and
- particle sizes smaller than/equal to 400 nm.

2. Films and film products to Claim 1 **characterized in that** the amylose content of the parent raw material is greater than 60%.

3. Films and film products to any of the above Claims **characterized in that** said films and film products
- have an excellent transparency, i. e. a transmission of greater than 80% for light having a wavelength of 560 nm,
- have a good moisture resistance in the 30% to 70% range of relative humidity of the air at 23°C,
- can be welded, deep-drawn, written on, printed on and copied,
- are highly effective as a barrier against gases, particularly nitrogen and oxygen, and
- are completely biodegradable to E-DIN 53 739.

4. Films and film products to any of the above Claims **characterized in that** said films and film products after the application from an aqueous solution onto a substrate, have an excellent adherence, or bondability, respectively, and provide an essential enhancement of the surface properties of the substrate.

## Revendications

1. Films et produits de film à base de dérivés d'amidon ou d'amylose fabriqués à partir d'une solution d'éther hydroxypropylique d'amidon ou d'amylose. **caractérisés par** les caractéristiques suivantes :
- pauvreté en sel de la solution d'éther hydroxypropylique d'amidon ou d'amylose
- un poids moléculaire moyen entre 10⁵ et 2*10⁷ g/mol. du dérivé,
- un degré de substitution de 0,1 à 0,5,
- une répartition des substituants pratiquement identique entre les particules de liaison C₂/C₃ et C₆ au sein de l'unité de glucose,
- une teneur en eau inférieure à 25 % de la masse par une atmosphère normale
- une polydisparité de 2 à 8
- ainsi qu'une structure amorphe avec une faible part cristalline et
- une taille des particules inférieure/ identique à 400 nm.

2. Films et produits de film selon la revendication 1,
**caractérisés en ce que**
la teneur en amylose de la matière brute initiale est supérieure à 60 %.

3. Films et produits de film selon l'une des revendications précédentes,
**caractérisés en ce que** les films ou produits de film
- sont d'une transparence brillante, c'est-à-dire qu'ils présentent une transmission supérieure à 80 % dans le cas d'une lumière ayant une longueur d'onde de 560 nm,
- disposent d'une bonne résistance à l'humidité de l'ordre de 30 à 70 % d'humidité relative de l'air à 23 °C,
- peuvent être soudés, emboutis, imprimés et copiés,
- présentent une forte action de barrière aux gaz, en particulier à l'azote et à l'oxygène et
- sont entièrement biodégradables selon les normes E-DIN 53 739.

4. Films et produits de film selon l'une des revendications précédentes,
**caractérisés en ce que**
les films ou produits de film présentent, après l'application à base de solution aqueuse sur un matériau support, un excellent pouvoir d'adhérence ou de liaison et constituent une amélioration sensible des caractéristiques de surface du matériau support.
